# FASCICULE DE BREVET EUROPEEN

(11) **EP 0 667 729 B1**
(45) Date de publication et mention de la délivrance du brevet: **02.04.1997**
(21) Numéro de dépôt: 95400296.0
(22) Date de dépôt: 13.02.1995
(51) Int. Cl.: H04Q 11/04, H04Q 3/62

(54) **Système sécurisé d'interconnexion de réseaux locaux via un réseau de transmission public**
Gesichertes System zur Verbindung lokaler Netzwerke über ein öffentliches Übertragungsnetzwerk
Secure system for interconnecting local networks via a public transmission network

(30) Priorité: 14.02.1994 FR 9401645
(43) Date de publication de la demande: 16.08.1995
(73) Titulaire: FRANCE TELECOM, 75015 Paris (FR); LA POSTE, F-92777 Boulogne Billancourt Cédex (FR)
(72) Inventeur: Nguyen-Thai, Binh, Cabinet BALLOT-SCHMIT, F-94230 Cachan (FR); Girault, Marc, Cabinet BALLOT-SCHMIT, F-94230 Cachan (FR); Millan, Bruno, Cabinet BALLOT-SCHMIT, F-94230 Cachan (FR)
(74) Mandataire: Schmit, Christian Norbert Marie

(56) Documents cités:
- EP-A- 0 436 799
- EP-A- 0 511 483
- EP-A- 0 511 497
- EP-A- 0 573 245
- IEEE INTERNATIONAL CONFERENCE ON COMMUNICATIONS - BOSTONICC '89, vol. 3, BOSTON US, page 1149 SUNDARESHAN ET AL. 'Design and deployment of an integrated Data Ciphering Unit inside a low bit rate voice transcoder for secure voice communications over telephone networks'

## Description

L'invention concerne un système sécurisé d'interconnexion de réseaux locaux via un réseau de transmission public notamment via un réseau à intégration de services (RNIS) tel que NUMERIS.

L'utilisation de systèmes informatiques reliés ou non à des réseaux locaux est souvent réservée à des personnes habilitées. En effet qu'il s'agisse de microordinateur de type PC (personal computer) ou compatible PC fonctionnant avec le système d'exploitation DOS ou, de station de travail (de capacité de traitement et de stockage supérieure à un PC), fonctionnant avec le système d'exploitation UNIX, une protection contre toute utilisation par des personnes non habilitées est généralement prévue.

Cette protection peut simplement consister, comme on vient de le dire, à prévoir un mot de passe pour protéger l'accès à certains fichiers ou à certaines applications. L'utilisateur habilité devra donc fournir son mot de passe au moment voulu pour accéder à ces zones protégées (fichier, application).

Cette protection fait intervenir l'utilisation d'un code secret qui bien entendu n'est connu que de l'utilisateur habilité et du système. Le système informatique comporte pour cela dans une mémoire non volatile et protégée en lecture et écriture le code secret. Ce système procède à une comparaison entre le code secret mémorisé et le code secret entré par l'utilisateur pour autoriser ou non l'accès aux zones protégées.

Dans le cas de station de travail fonctionnant avec le système d'exploitation UNIX, c'est l'accès à ces stations qui est généralement protégé. En effet, l'accès à ces stations ne peut se faire que lorsqu'un programme de connexion s'exécute et ce programme ne se déroule que lorsque le nom d'un utilisateur habilité et lorsque le mot de passe de cet utilisateur ont été reconnus et correspondent bien à un utilisateur habilité.

L'inconvénient majeur de cette protection par mots de passe est que ces mots de passe sont facilement "cassés" par un outil automatique, ou encore simplement par affichage sur un écran placé à côté de la station concernée. De plus, l'utilisation des commandes standards et des fichiers de définition du système Unix, permet à un pirate de court-circuiter cette protection.

Le déposant s'est intéressé à la protection des systèmes informatiques d'une façon plus générale et notamment à la protection des systèmes informatiques reliés à un réseau local et désirant communiquer à travers un réseau public.

La présente invention a pour but d'empêcher qu'un système informatique non autorisé ne puisse communiquer avec un autre système informatique protégé à travers le réseau public.

La présente invention a plus particulièrement pour objet un système d'interconnexion de réseaux locaux via un réseau public de transmission dans lesquels des systèmes informatiques de type microordinateurs ou stations de travail connectés à un réseau local A sont susceptibles de se connecter au réseau public par un routeur X pour communiquer avec un ou des systèmes informatiques de type microordinateurs ou stations de travail connectés à au moins un autre réseau local B, lesquels sont susceptibles d'être reliés au réseau public par un routeur Y; ce système d'interconnexion étant principalement caractérisé en ce qu'il comporte des moyens de sécurisation de l'établissement des communications entre les réseaux locaux à travers le réseau public mettant en oeuvre un mécanisme d'échange de certificats et, en ce que ces moyens sont placés dans les routeurs.

La présente invention sera mieux comprise à l'aide de la description qui va suivre et qui est donnée à titre illustratif et non limitatif et en regard des dessins sur lesquels :
- la figure 1, représente l'architecture matérielle de deux réseaux locaux susceptibles de se connecter à travers un réseau de transmission public tel que le réseau RNIS,
- la figure 2, représente un schéma de réalisation des moyens de sécurisation.

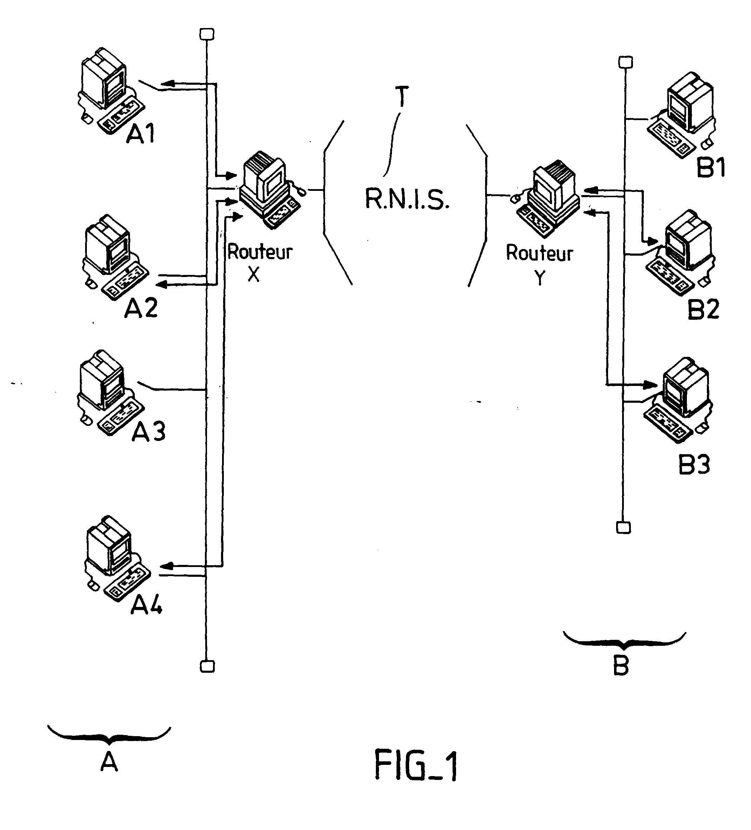

La description qui va suivre va être faite selon un exemple d'architecture simple, tel que représenté sur la figure 1, dans lequel 2 réseaux locaux distants sont susceptibles d'être connectés à travers le réseau public. Bien entendu l'invention ne se limite pas à cet exemple de réalisation, elle s'applique également à l'interconnexion entre un nombre de réseaux locaux supérieur à 2.

Par ailleurs l'invention s'applique tout aussi bien à des systèmes informatiques tel que des microordinateurs de type PC travaillant avec un système d'exploitation DOS, qu'à des stations de travail travaillant avec le système d'exploitation UNIX.

Dans la suite de la description on parlera pour simplifier de station, ce terme regroupant tous les cas de figures.

Dans l'exemple qui a été représenté le réseau local A permet de connecter les stations A1, A2, A3 et A4 et le routeur X. Le réseau local B permet de connecter les stations B1, B2, B3 et le routeur Y. Les routeurs X et Y peuvent être connectés à travers le réseau de transmission public T (à intégration de services RNIS).

Comme le symbolisent les flèches sur cette figure 1, on prévoit par exemple que les utilisateurs des stations A1 et A2 sont autorisés à avoir des communications bidirectionnelles à travers le réseau public. Par contre, l'utilisateur de la station A4 n'est autorisé qu'à avoir des communications sortantes à travers ce réseau, et l'utilisateur de la station A3 n'a droit à aucun échange à travers ce réseau.

Le système d'interconnexion proposé selon l'invention permet de satisfaire ces conditions tout en garantissant un niveau de sécurité obtenu par un mécanisme d'échange de certificat basé sur un crypto-système de type RSA (RIVEST, SHAMIR, ADLEMAN).

Ainsi, selon cet exemple de réalisation les utilisateurs du réseau A et du réseau B forment un groupe fermé d'abonnés. Les pirates éventuels extérieurs à ce groupe ne disposeront pas de certificat habilité et seront rejetés. Bien entendu on peut insérer autant de groupes nouveaux que l'on veut dans ce groupe fermé d'abonnés. Il suffira alors, de charger les certificats d'habilitation dans les routeurs.

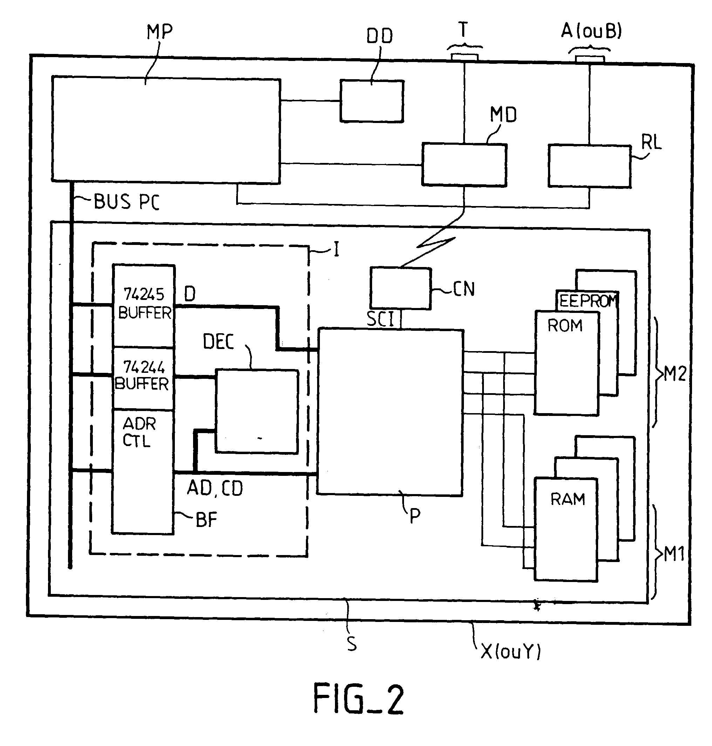

On a représenté sur la figure 2, le schéma de réalisation des moyens de sécurisation implantés dans chaque routeur.

La fonction routeur est réalisée au moyen d'un microordinateur de type PC dans lequel un logiciel de routage existant sur le marché a été chargé. On pourra prendre par exemple le logiciel de routage LANXPAND/IP de la société OST.

Le routeur permet d'une part de se connecter au réseau local et d'autre part de se connecter au réseau public. Le logiciel de routage assure l'établissement des communications après avoir opéré le filtrage des adresses de réseau public et des adresses réseau local comme cela sera détaillé dans la suite.

Le routeur comporte donc de façon classique un microprocesseur MP muni de ressources et un disque dur DD dans lequel sont chargés tous les programmes de démarrage du routeur ainsi que le programme de routage qui assure le filtrage des adresses réseau local .

Selon l'invention les moyens de sécurisation S permettent de se connecter au bus d'adresses, de données et de commande du microordinateur au moyen d'une interface T, et de se connecter au réseau public via un modem MD. La fonction modem peut par exemple être réalisée par une carte modem existant sur le marché et qui est implantée dans le routeur.

Les moyens de sécurisation S comportent en outre un processeur de traitement du signal P apte à mettre en oeuvre les mécanismes d'authentification selon l'invention et, en particulier, à mettre en oeuvre un algorithme de chiffrement tel que l'algorithme connu sous la dénomination RSA ou tout autre algorithme reposant sur l'arithmétique dans l'anneau des entiers modulo N. On pourra prendre par exemple comme processeur le processeur de signal DSP 56000.

A ce processeur sont associés des moyens de mémorisation telle qu'une mémoire de programme M2 et une mémoire de travail M1. La mémoire de programme M2 est une mémoire non volatile chargée de un ou plusieurs programmes de mise en oeuvre de l'algorithme de sécurité tel que l'algorithme RSA.

La mémoire de programme est par exemple une mémoire non volatile programmable électriquement (EPROM) et éventuellement effaçable électriquement (EEPROM). La mémoire de travail M1 est une mémoire à lecture et écriture de type RAM.

Une liaison série SCI permet au processeur de signal d'accéder au réseau public T à travers le modem MD et un connecteur CN de type RS232.

L'interface I entre le bus du routeur et le processeur de signal est réalisée au moyen de circuit tampon classique d'entrée/sortie BF pour les lignes de données D et pour les lignes d'adresse AD et de commande CD.

Conformément à l'invention, on charge au préalable dans chaque routeur la table des certificats. Un certificat correspond à une information propre à chaque station. Ainsi le routeur X va comporter une table de certificats TA correspondant aux certificats relatifs à chaque station du réseau A. Le routeur va comporter une table TB relative aux certificats affectés à chaque station du réseau local B.

Le certificat est une information propre à chaque station et comprend une donnée D comprenant les données suivantes :
- l'adresse du réseau local ADRL,
- l'adresse du réseau public ADRP,
- le type de station c'est à dire une donnée T permettant de savoir s'il s'agit d'un routeur ou d'une simple station.

Ainsi selon l'exemple donné à la figure 1, la table de certificat TA relative au réseau local A va comporter les certificats CA1, CA2, CA3, CA4. La table de certificat TB va comporter les certificats CB1, CB2, CB3. Ces tables ont été représentées ci-dessus :

| TA | | | TB | | |
|---|---|---|---|---|---|
| CA1 : | ADRL | (A1) | CB1 : | ADRL | (B1) |
| | ADRP | (A1) | | ADRP | (B1) |
| | T | (A1) | | T | (B1) |
| | | | | | |
| CA2 : | ADRL | (A2) | CB2 : | ADRL | (B2) |
| | ADRP | (A2) | | ADRP | (B2) |
| | T | (A2) | | T | (B2) |
| | | | | | |
| CA3 : | ADRL | (A3) | CB3 : | ADRL | (B3) |
| | ADRP | (A3) | | ADRP | (B3) |
| | T | (A3) | | T | (B3) |
| | | | | | |
| CA4 : | ADRL | (A4) | | | |
| | ADRP | (A4) | | | |
| | T | (A4) | | | |

Selon l'invention chaque certificat associé à une station, correspond en fait à une information signée obtenue par application d'un algorithme de signature connu f sur les données au moyen d'une clef secrète s, la vérification du certificat étant effectuée à l'aide de la clef publique associée p. Ces certificats correspondent ainsi à des données signées D incluant l'adresse réseau local ADRL de la station, l'adresse réseau public ADRP et l'identification T de la station; soit pour la station A1 : ADRL (A1), ADRP (A1), T (A1).

Les tables TA et TB sont enregistrées dans les mémoires EEPROM des moyens de sécurisation sur chaque routeur.

Chaque routeur dispose, en outre, des données D relatives à chaque station (DA1 à DA4 ou DB1 à DB3). Chaque routeur dispose donc également des données de filtrage d'adresse, à savoir : les adresses réseau local et le type de communication, pour chaque station. En effet, pour chaque station on associe à l'adresse réseau local de la station une donnée correspondant à l'autorisation de communication en entrée et en sortie.

Une station pouvant avoir des communications bidirectionnelles, a une adresse réseau local ADRL autorisée, et est déclarée (+). Une station ne pouvant avoir aucune communication avec l'extérieur est déclarée (-).

Pour chaque adresse, on déclare les autorisations en entrée et en sortie. On a par conséquent dans le fichier de filtrage d'adresse les différents cas répertoriés :
- ADRL ++ :: communications bidirectionnelles
- ADRL +- :: communications en entrée seulement
- ADRL -+ :: communications en sortie seulement
- ADRL -- :: aucune communication

Ces fichiers de données décrivant le type de communication, c'est à dire, les autorisations en entrée et sortie sont stockés de façon sécurisée dans les mémoires EEPROM des moyens de sécurisation de chaque routeur.

Chaque routeur va donc avoir en mémoire toutes les adresses de réseau local et le type de communication autorisée.

Conformément à l'invention lorsqu'une station, par exemple, la station A1 du réseau local A désire communiquer avec la station B2 du réseau local B, le routeur X vérifie que la station A1 a bien une adresse réseau local ADRL autorisée en sortie par lecture de la donnée de filtrage d'adresse de cette station.

Lorsque le routeur X a vérifié que l'adresse a bien été déclarée "autorisée" il envoie une demande d'établissement d'un circuit virtuel sur le réseau public à intégration de services (RNIS) vers le routeur Y. Le routeur Y reçoit cette demande. Dans le cas où il peut établir avec succès la connexion, il envoie la confirmation de l'établissement. Dans le cas contraire, s'il n'arrive pas à établir la communication, il envoie un ordre de répudiation.

Le routeur X envoie alors à travers le réseau public le certificat signé CA1. Lorsque le routeur Y reçoit cette donnée CA1, il la vérifie au moyen de la clef publique p, à partir de la donnée DA1 que le routeur Y a dans son fichier de filtrage d'adresse. Si le certificat est vérifié, alors le routeur Y n'interrompt pas la communication et le routeur X peut envoyer le service demandé par l'appelant la station qui appelle. Dans le cas contraire le routeur Y interrompt la communication.

En pratique, ce sont les champs information "ADRL" de la donnée D et de la donnée DA1 qui sont comparés pour authentifier la station.

Les différents échanges entre X et Y ont été représentés sur le tableau d'authentification annexé à la description.

Dans le cas ou il y a eu authentification de la station appelante, on procède à une authentification de la station appelée. Dans le cas contraire, le routeur Y (de la station appelée) interrompt la communication.

Conformément à l'invention, les tables de certificats sont définies au préalable, et chargées dans les routeurs lors de l'installation.

Ces tables sont délivrées par un organe que l'on appelle "autorité". Il s'agira généralement de l'un des routeurs du système d'interconnexion.

Le routeur assurant la fonction "autorité" comportera pour cela dans ses moyens de sécurisation, la fonction de signature lui permettant à partir des données D que l'on aura chargé en mémoire, d'obtenir tous les certificats. Chaque table obtenue sera ensuite chargée sur chaque routeur par un opérateur habilité. L'autorité va par conséquent comporter en mémoire ROM ou EEPROM, le programme mettant en oeuvre l'algorithme de type RSA ainsi qu'une clé secrète et qu'une clé publique pour opérer les calculs de certificats et obtenir ainsi les différentes tables de certificats.

Ainsi, le programme met en oeuvre les procédures d'authentification active de la station appelante à l'aide de la technique de type "challenge-réponse" telle que décrite par le tableau ci-dessous.

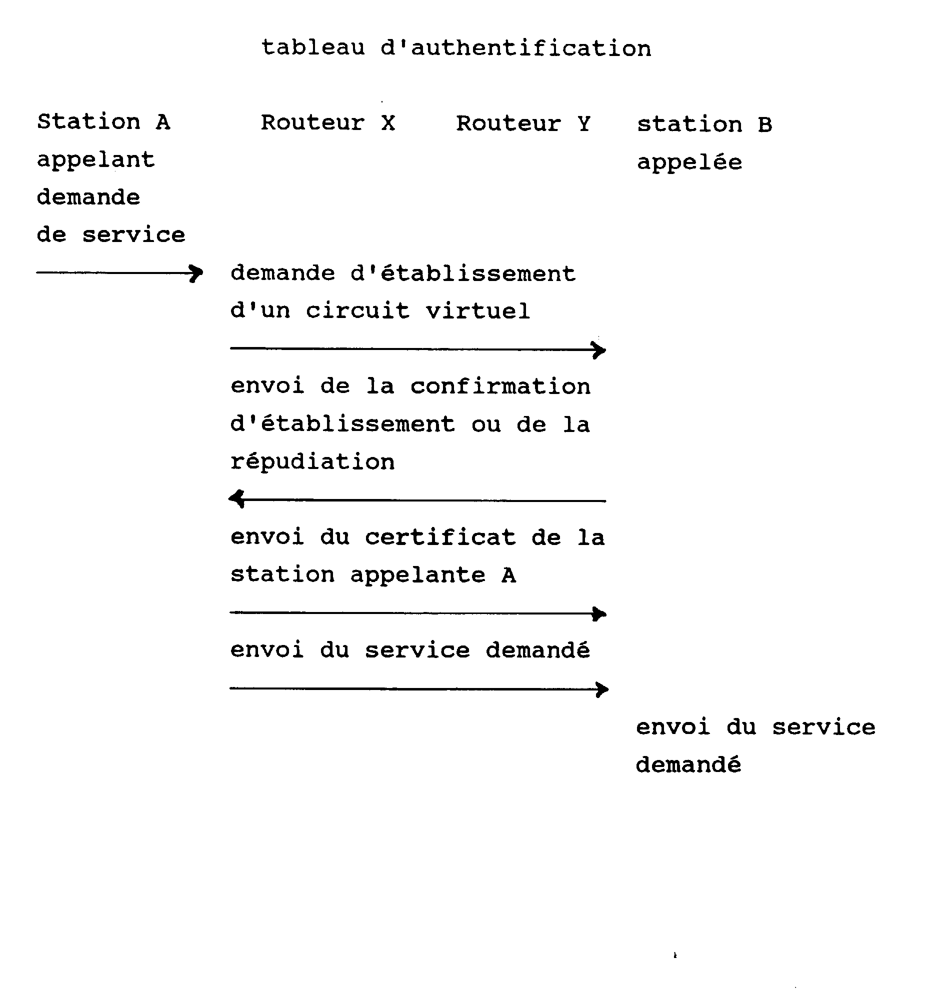

## Revendications

1. Système d'interconnexion de réseaux locaux via un réseau public de transmission dans lequel des équipements de type station de travail connectés à un réseau local A sont susceptibles de se connecter au réseau public par un routeur X pour communiquer avec un ou des équipements de type station de travail connectés à au moins un autre réseau local B, lesquels sont susceptibles d'être reliés au réseau public par un routeur Y, caractérisé en ce qu'il comporte des moyens de sécurisation (S) de l'établissement des communications entre les réseaux locaux à travers le réseau public mettant en oeuvre un mécanisme d'échange de certificats d'authentification qui correspondent à des informations signées propres à chaque station, et en ce que ces moyens sont placés dans les routeurs.

2. Système d'interconnexion de réseau selon la revendication 1, dans lequel le routeur comporte des moyens de commande et de traitement, des moyens de connexion au réseau local et des moyens de connexion au réseau public, caractérisé en ce que les moyens de sécurisation (S) comportent :
- des moyens de traitement (P),
- des moyens de connexion (I) au bus des moyens de commande et de traitement (MP) du routeur,
- des moyens de mémorisation (M1, M2) de programmes et de données, les moyens de mémorisation comportant :
- une table de certificats permettant de vérifier à chaque établissement d'une communication et envoi du certificat que l'information correspondant à ce certificat correspond à un équipement répertorié autorisé,
- Les procédures d'authentification active de la station appelante.

3. Système d'interconnexion de réseau selon la revendication 1 du 2, caractérisé en ce que chaque certificat de la table correspond à une donnée signée indiquant une adresse de réseau local, une adresse de réseau public, le type d'équipement auquel ce certificat correspond.

4. Système d'interconnexion selon l'une quelconque des revendications précédentes, caractérisé en ce que chaque certificat a été obtenu par signature au moyen d'un algorithme de signature à clé publique.

5. Système d'interconnexion selon l'une quelconque des revendications précédentes, caractérisé en ce que l'un des routeurs assure une fonction d'autorité de certification vis à vis des autres routeurs et est apte pour cela à générer un couple clé publique - clé secrète lui permettant au moyen d'un algorithme de signature implanté dans sa mémoire de programme d'obtenir la table de certificats à charger dans les moyens de mémorisation de données des autres routeurs.

6. Système d'interconnexion selon l'une quelconque des revendications précédentes, caractérisé en ce que chaque routeur comporte dans sa mémoire de programme un algorithme de vérification de signature et la clé publique de manière à vérifier pour chaque appel entrant la validité du certificat.

## Patentansprüche

1. System zur Verbindung lokaler Netzwerke über ein öffentliches Übertragungsnetzwerk, bei dem mit einem lokalen Netzwerk A verbundene Geräte des Typs Arbeitsplatz sich über eine Leitvorrichtung X mit dem öffentlichen Netzwerk verbinden können, um mit einem oder mehreren, mit wenigsten einem anderen lokalen Netzwerk B verbundenen Geräten des Typs Arbeitsplatz zu kommunizieren, die durch eine Leitvorrichtung Y mit dem öffentlichen Netzwerk verbunden sind,
**dadurch gekennzeichnet,**
daß es zum Herstellen der Verbindungen zwischen den lokalen Netzwerken über das öffentliche Netzwerk Sicherungseinrichtungen (S) umfaßt, die einen Austauschmechanismus von Authentifizierungs-Zertifikaten benutzen, die signierten, jeder Station eigenen Informationen entsprechen, und dadurch, daß sich diese Einrichtungen in den Leitvorrichtungen befinden.

2. Netzwerk-Verbindungssystem nach Anspruch 1, bei dem die Leitvorrichtung Steuer- und Verarbeitungseinrichtungen, Verbindungseinrichtungen mit dem lokalen Netzwerk und Verbindungseinrichtungen mit dem öffentlichen Netzwerk umfassen,
dadurch gekennzeichnet, daß die Sicherungseinrichtungen (S) umfassen:
- Verarbeitungseinrichtungen (P),
- Einrichtungen (I) zur Verbindung mit dem Bus der Steuer- und Verarbeitungseinrichtungen (MP) der Leitvorrichtung,
- Speichereinrichtungen (M1, M2) von Programme und Daten, wobei diese Speichereinrichtungen umfassen:
- eine Zertifikatstabelle, die bei jeder Herstellung einer Verbindung und Sendung des Zertifikats ermöglicht, zu überprüfen, ob die diesem Zertifikat entsprechende Information einem autorisierten registrierten Gerät entspricht,
- die Aktiv-Authentifizierungs-Verfahren des an- bzw. abfragenden Platzes.

3. Netzwerk-Verbindungssystem nach Anspruch 2, dadurch gekennzeichnet, daß jedes Zertifikat der Tabelle einer signierten Angabe entspricht, die eine Adresse des lokalen Netzwerks, eine Adresse des öffentlichen Netzwerks und den Gerätetyp angibt, dem dieses Zertifikat entspricht.

4. Netzwerk-Verbindungssystem nach einem der vorangehenden Ansprüche, dadurch gekennzeichnet, daß jedes Zertifikat erhalten wurde durch Signatur wenigstens eines Signatur-Algorithmus mit öffentlichem Schlüssel.

5. Netzwerk-Verbindungssystem nach einem der vorangehenden Ansprüche, dadurch gekennzeichnet, daß eine der Leitvorrichtungen gegenüber den anderen Leitvorrichtungen die Funktion einer Zertifikationsautorität ausübt und zu diesem Zweck fähig ist, ein aus öffentlichem Schlüssel und Geheimschlüssel bestehendes Paar zu erzeugen, das ihr mittels eines in ihrem Programmspeicher installierten Signatur-Alghorithmus ermöglicht, die in die Datenspeichereinrichtungen der anderen Leitvorrichtungen zu ladende Zertifikatetabelle zu erhalten.

6. Netzwerk-Verbindungssystem nach einem der vorangehenden Ansprüche, dadurch gekennzeichnet, daß jede Leitvorrichtung in ihrem Programmspeicher einen Signatur-Prüf-Algorithmus und den öffentlichen Schlüssel enthält, um bei jeder eingehenden Abfrage die Gültigkeit des Zertifikats zu überprüfen.

## Claims

1. System for inter-connecting local networks via a public transmission network in which equipment of the work station type will be connected to the public network by a router X in order to communicate with one or several pieces of equipment of the work station type connected to at least one other local network B, these being set up to be linked in turn to the public network Y by means of a router Y, characterised in that it has security-protection means (S) for establishing communications between the local networks across the public network by implementing a mechanism for exchanging authentication certificates which correspond to signed data specific to each station and these means are located in the routers.

2. Network inter-connection system as claimed in claim 1, characterised in that the router has control and processing means, means for connecting to the local network and means for connecting to the public network, characterised in that the security-protection means consist of:
- processing means (P),
- means for connecting (I) to the bus of the control and processing means (MP) of the router,
- memory means (M1, M2) for programmes and data, the memory means having:
- a table of certificates which, once a communication has been established and a certificate is sent, enables a check to be made that the information corresponding to this certificate corresponds to one of the authorised pieces of equipment within the system,
- the active authentication procedures of the calling station.

3. Network inter-connection system as claimed in claim 2, characterised in that each certificate in the table corresponds to a signed datum indicating a local network address, a public network address and the type of equipment to which the certificate relates.

4. Inter-connection system as claimed in one of the preceding claims, characterised in that each certificate was produced by signature using a signature algorithm based on a public key.

5. Inter-connection system as claimed in any one of the preceding claims, characterised in that one of the routers provides a certificate authorisation function with respect to the other routers and is set up to generate a public key-secret key pair for this purpose, enabling it by means of a signature algorithm embedded in its programme memory to retrieve the table of certificates to be loaded in the data memory means of the other routers.

6. Inter-connection system as claimed in any one of the preceding claims, characterised in that each router has in its programme memory a signature verification algorithm and the public key so that the validity of the certificate can be verified for each incoming call.
